# EUROPÄISCHE PATENTSCHRIFT

(11) **EP 1 127 642 B1**
(45) Veröffentlichungstag und Bekanntmachung des Hinweises auf die Patenterteilung: **07.09.2005**
(21) Anmeldenummer: 00126397.9
(22) Anmeldetag: 04.12.2000
(51) Int. Cl.: B23B 31/18, B23B 31/19

(54) **Hebelfutter**
Power lever chuck
Mandrin à levier

(30) Priorität: 19.02.2000 DE 20003067 U
(43) Veröffentlichungstag der Anmeldung: 29.08.2001
(73) Patentinhaber: Röhm GmbH, 89567 Sontheim (DE)
(72) Erfinder: Taglang, Johann, 89441 Medlingen (DE)
(74) Vertreter: Hentrich, Swen

(56) Entgegenhaltungen:
- FR-A- 1 242 353
- FR-A- 2 373 351
- US-A- 3 365 206
- US-A- 5 605 343

## Beschreibung

Die Erfindung betrifft ein kraftbetätigtes Hebelfutter mit als Hebel ausgebildeten Spannarmen, die jeweils in einer Führungsaufnahme im Futterkörper axial verschieblich geführt und durch eine Lagerung in einem im Futterkörper ausgebildeten Kugelsitz um eine einer Sehne des Querschnitts durch den Futterkörper entsprechenden Schwenkachse verstellbar sind (siehe z.B. US 5 605 343).

Bei derartigen aus der Praxis bekannten Hebelfutter hat es sich als problematisch erwiesen, die Führungsaufnahmen sowie den Kugelsitz mit der notwendigen Genauigkeit relativ zueinander auszurichten, da die in dem Futterkörper ausgebildeten Führungsaufnahmen nur schwierig und aufwendig zu bearbeiten sind, um in diesen Planflächen zu erzeugen, deren hälftiger Abstand exakt auf den Mittelpunkt des Kugelsitzes zeigt und deren parallele Anordnung gegenüber dem Kugelsitz nicht verdreht sein darf. Die notwendige, mittels Errodieren erfolgende Bearbeitung des Futterkörpers muß mit großer Sorgfalt erfolgen, damit durch einen falschen Bearbeitungsschritt nicht der gesamte Futterkörper unbrauchbar wird.

Der Erfindung liegt daher die Aufgabe zugrunde, ein Hebelfutter der eingangs genannten Art so auszubilden, daß im Futterkörper die relative Ausrichtung von den Kugelsitzen und den axialen Führungsflächen der Spannarme einfacher realisiert werden kann.

Diese Aufgabe wird bei einem Hebelfutter der eingangs genannten Art dadurch gelöst, daß in der Führungsaufnahme eine der seitlichen Abstützung des Spannarms dienende Abstimmplatte lösbar befestigt ist.

Die Erfindung bietet den Vorteil, daß in einfacher Weise die Abstimmplatte im Futterkörper plaziert und dort vermessen werden kann, welche Bearbeitung erforderlich ist, um die gewünschte exakte Ausrichtung gegenüber dem Kugelsitz zu erreichen. Die Bearbeitung selber kann dann bei der wieder aus dem Futterkörper entfernten Abstimmplatte isoliert vorgenommen werden, die einfacher zu handhaben und deren Bearbeitungsflächen leichter zugänglich sind. Das Risiko einer fehlerhaften Bearbeitung betrifft nur die kostengünstige Abstimmplatte und nicht den Futterkörper des Hebelfutters insgesamt.

Eine bevorzugte Ausführungsform der Erfindung ist dadurch gekennzeichnet, daß die Abstimmplatte zweifach vorgesehen und die beiden Abstimmplatten beidseits des Spannarms angeordnet sind, da so eine Verschiebung in den beiden senkrecht zu den Führungsflächen liegenden Richtungen möglich ist.

Es hat sich als zweckmäßig erwiesen, wenn die Abstimmplatte in einer in der Führungsaufnahme ausgebildeten Plattentasche angeordnet und dort durch seitlich den Futterkörper durchsetzende Sicherungsglieder gesichert ist, wobei dies insbesondere im Hinblick auf die leichte Befestigungsmöglichkeit der Abstimmplatten sowie deren reproduzierbarer Positionierung in den Führungsaufnahmen günstig ist.

Im folgenden wird die Erfindung an einem in der Zeichnung dargestellten Ausführungsbeispiel näher erläutert; es zeigen:
- Fig. 1: die Vorderansicht eines erfindungsgemäßen Hebelfutters mit drei gleichmäßig über den Umfang verteilt angeordneten Spannarmen,
- Fig. 2: einen Axialschnitt durch das Hebelfutter mit dem Spannarm in einer axial vorgeschobenen Position,
- Fig. 3: eine der Fig. 2 entsprechende Darstellung mit einer axial zurückgezogenen Position des Spannarms,

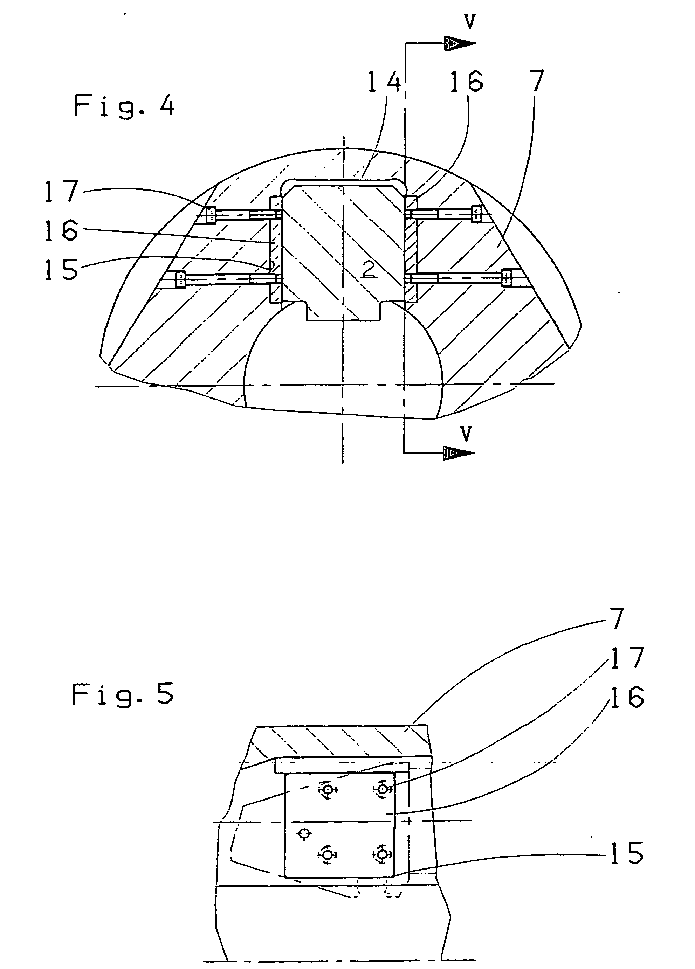

- Fig. 4: den Schnitt IV-IV aus Fig. 3, und
- Fig. 5: den Schnitt V-V aus Fig. 4.

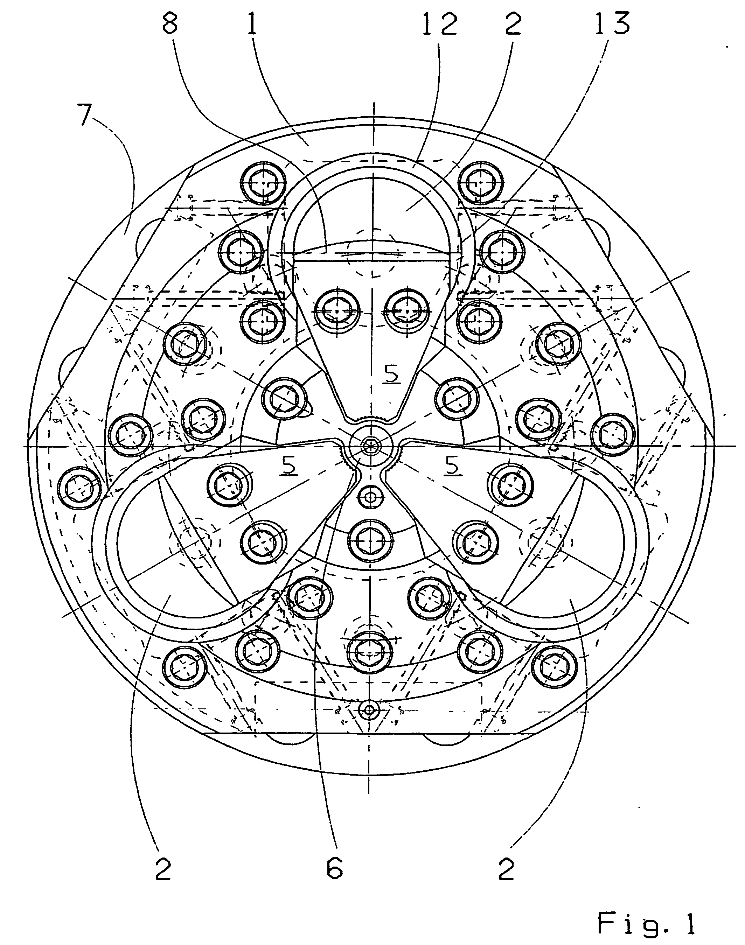

Fig. 1 zeigt die Stirnseite eines kraftbetätigten Hebelfutters 1, das drei gleichmäßig um den Umfang verteilt angeordnete Spannarme 2 aufweist, an denen mittels Befestigungsschrauben 3 die die Spannflächen 4 aufweisenden Spanneinsätze 5 befestigt sind. Mit 6 ist eine Zentrierplatte bezeichnet. Die Spannarme 2 sind als Hebel ausgebildet und im Futterkörper 7 um eine Schwenkachse 8 verstellbar, die - in einem Querschnitt durch das Hebelfutter 1 gesehen - auf einer Sehne des runden Futterkörpers 7 liegt.

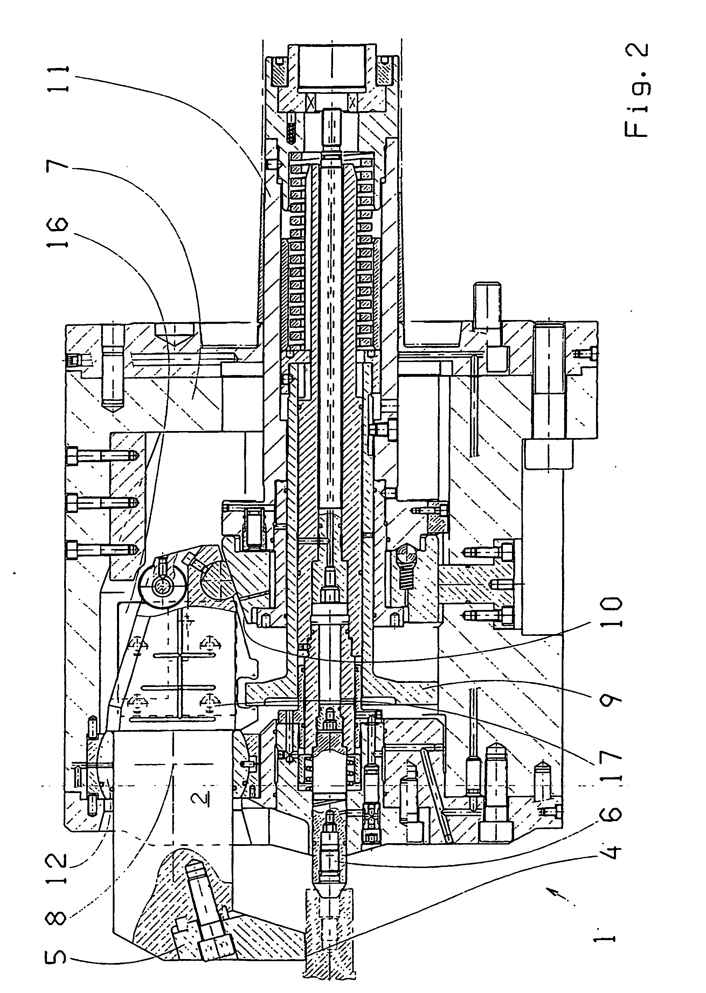

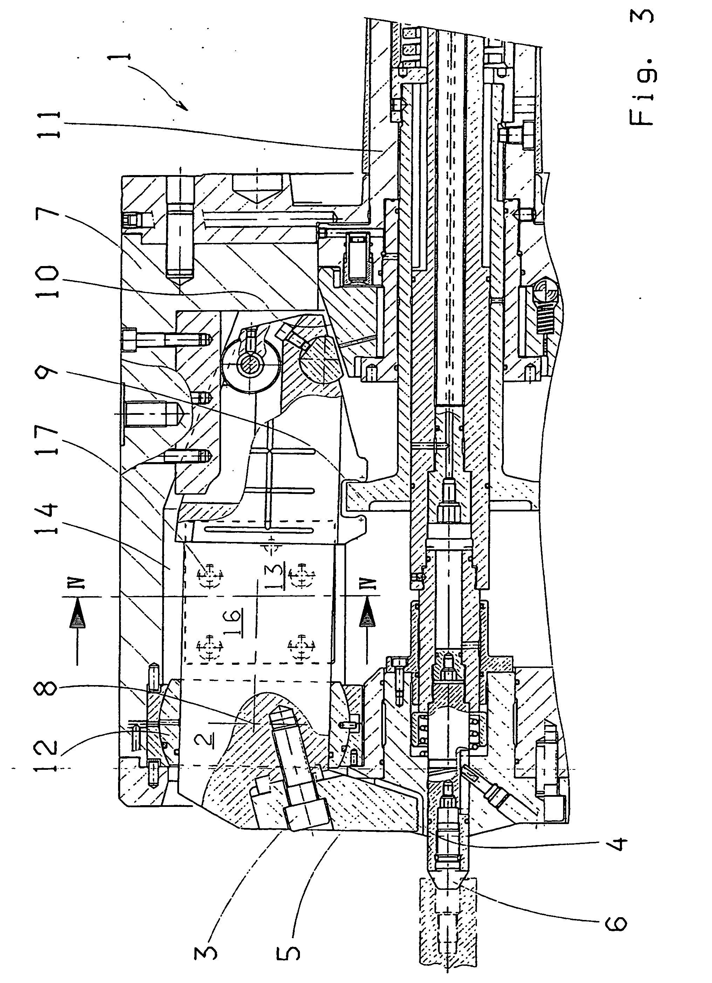

Die axiale Verstellung der Spannarme 2 erfolgt mittels einer axial verstellbaren Spannstange 9, so daß die Spannarme 2 zwischen der in der Fig. 2 gezeigten und der in Fig. 3 gezeigten axialen Stellung verschoben werden können. Die Verschwenkung der Spannarme 2 wird durch eine Keilfläche 10 bewirkt, die gleichfalls mittels eines Kolbens 11 axial verschoben werden kann und mit den den Spanneinsätzen 5 abgewandten axialen Enden der Spannarme 2 zusammenwirkt. Um ein präzises Verschwenken um die Schwenkachse 8 zu erreichen, sind die Spannarme 2 in einem Kugelsitz 12 gelagert. Dieser Kugelsitz 12 muß nun präzise gegenüber den Führungsflächen 13 für die axiale Verstellung der Spannarme 2 ausgerichtet sein. Um dies zu erreichen, sind in einer Führungsaufnahme 14 für die Spannarme 2 Plattentaschen 15 ausgebildet, in die beidseits des Spannarms 2 Abstimmplatten 16 eingesetzt und lösbar befestigt werden können, wozu seitlich den Futterkörper 7 durchsetzende Sicherungsglieder 17, nämlich Sicherungsschrauben, vorgesehen sind. Mit dem als Referenz gegebenen Kugelsitz 12 kann nunmehr die erforderliche Plattendicke bestimmt und die Bearbeitung der Abstimmplatten 16 nach deren Entfernen aus dem Futterkörper 7 erfolgen, wobei dies aufgrund der lösbaren Befestigung auch in iterativen Schritten möglich ist, bei denen jeweils zwischenzeitlich eine Vermessung der in die Plattentaschen 15 eingesetzen Abstimmplatten 16 erfolgt.

## Patentansprüche

1. Kraftbetätigtes Hebelfutter mit als Hebel ausgebildeten Spannarmen (2), die jeweils in einer Führungsaufnahme (14) im Futterkörper (7) axial verschieblich geführt und durch eine Lagerung in einem im Futterkörper (7) ausgebildeten Kugelsitz (12) um eine einer Sehne des Querschnitts durch den Futterkörper (7) entsprechenden Schwenkachse (8) verstellbar sind, **dadurch gekennzeichnet, daß** in der Führungsaufnahme (14) eine der seitlichen Abstützung des Spannarms (2) dienende Abstimmplatte (16) lösbar befestigt ist.

2. Hebelfutter nach Anspruch 1, **dadurch gekennzeichnet, daß** die Abstimmplatte (16) zweifach vorgesehen und die beiden Abstimmplatten (16) beidseits des Spannarms (2) angeordnet sind.

3. Hebelfutter nach Anspruch 1 oder 2, **dadurch gekennzeichnet, daß** die Abstimmplatte (16) in einer in der Führungsaufnahme (14) ausgebildeten Plattentasche (15) angeordnet und dort durch seitlich den Futterkörper (7) durchsetzende Sicherungsglieder (17) gesichert ist.

## Claims

1. A power-operated lever chuck with clamping arms (2) which are in the form of levers and which are each axially slidably guided in a respective guide receiving means (14) in the chuck body (7) and which are displaceable by a mounting in a ball seat (12) in the chuck body (7) about a pivot axis (8) corresponding to a chord of the cross-section through the chuck body (7), **characterised in that** an adaptor plate (16) serving for lateral support of the clamping arm (2) is releasably fixed in the guide receiving means (14).

2. A lever chuck according to claim 1 **characterised in that** the adaptor plate (16) is provided in duplicate and the two adaptor plates (16) are arranged on both sides of the clamping arm (2).

3. A lever chuck according to claim 1 or claim 2 **characterised in that** the adaptor plate (16) is arranged in a plate pocket (15) provided in the guide receiving means (14) and is secured there by securing members (17) passing laterally through the chuck body (7).

## Revendications

1. Mandrin à leviers actionné par une source d'énergie extérieure, comportant des bras de serrage (2) agencés sous la forme de leviers, qui sont guidés chacun avec possibilité de coulissement axial dans un logement de guidage (14) dans le corps de mandrin (7) et qui, grâce à un montage dans un palier sphérique (12) aménagé dans le corps de mandrin (7), peuvent pivoter autour d'un axe de pivotement (8) qui correspond à une corde de la section transversale du corps de mandrin (7), **caractérisé par le fait qu'**une plaque de réglage (16) qui sert d'appui latéral au bras de serrage (2) est fixée de manière démontable dans le logement de guidage (14).

2. Mandrin à leviers selon la revendication 1, **caractérisé par le fait qu'**il est prévu deux plaques de réglage (16) et que les deux plaques de réglage (16) sont disposées de chaque côté du bras de serrage (2).

3. Mandrin à leviers selon la revendication 1 ou 2, **caractérisé par le fait que** la plaque de réglage (16) est disposée dans un logement de plaque (15) aménagé dans le logement de guidage (14) et est tenue par des éléments de blocage (17) qui traversent latéralement le corps de mandrin (7).
